(19) Europäisches Patentamt
European Patent Office
Office européen des brevets

(11) EP 2 092 002 B1

(12) **EUROPEAN PATENT SPECIFICATION**

(45) Date of publication and mention of the grant of the patent:
**21.08.2013 Bulletin 2013/34**

(21) Application number: **07846638.0**

(22) Date of filing: **16.11.2007**

(51) Int Cl.:
***C08J 9/00*** *(2006.01)*
***C08J 9/16*** *(2006.01)*
***B29C 44/34*** *(2006.01)*

(86) International application number:
**PCT/EP2007/009933**

(87) International publication number:
**WO 2008/061678 (29.05.2008 Gazette 2008/22)**

(54) **EXPANDABLE VINYL AROMATIC POLYMERS WITH ENHANCED HEAT INSULATION AND PROCESS FOR THE PREPARATION THEREOF**

EXPANDIERBARE VINYLAROMATISCHE POLYMERE MIT VERBESSERTER WÄRMEISOLATION UND VERFAHREN ZU DEREN HERSTELLUNG

POLYMÈRES AROMATIQUES VINYLIQUES EXPANSIBLES ASSURANT UNE MEILLEURE ISOLATION THERMIQUE ET LEUR PROCÉDÉ DE PRÉPARATION

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **23.11.2006 IT MI20062245**

(43) Date of publication of application:
**26.08.2009 Bulletin 2009/35**

(73) Proprietor: **versalis S.p.A.**
**20097 San Donato Milanese (MI) (IT)**

(72) Inventors:
- **GHIDONI, Dario**
  **46023 Gonzaga (IT)**
- **PONTICIELLO, Antonio**
  **37060 Mozzecane (IT)**
- **SIMONELLI, Alessandra**
  **46100 Mantova (IT)**
- **FELISARI, Riccardo**
  **46039 S. Giorgio di Mantova (IT)**

(74) Representative: **Zumstein, Angela**
**Maiwald Patentanwalts GmbH**
**Elisenhof**
**Elisenstrasse 3**
**80335 München (DE)**

(56) References cited:
**WO-A-2004/087798**
**WO-A-2006/058733**
**WO-A-2006/061571**
**WO-A-2006/108672**
**GB-A- 1 072 983**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 092 002 B1

## Description

The present invention relates to expandable vinyl aromatic polymers with an enhanced heat insulation capacity and the process for the preparation thereof.

More specifically, the present invention relates to a process for the preparation of expandable vinyl aromatic polymers which, after expansion, have a reduced heat conductivity also with a low density, and to the products thus obtained.

Expandable vinyl aromatic polymers, and among these, in particular, expandable polystyrene, are known products which have been used for a long time for preparing expanded articles which can be adopted in various applicative fields, among which one of the most important is the field of heat insulation.

These expanded products are obtained by swelling in a closed mould beads of expandable polymer impregnated with a gas and molding the swollen particles contained inside the mould by means of the contemporaneous effect of pressure and temperature. The swelling of the particles is generally effected with vapour, or another gas, maintained at a temperature slightly higher than the glass transition temperature (Tg) of the polymer.

A particular applicative field of expanded polystyrene is that of thermal insulation in the building industry where it is generally used in the form of flat sheets. The flat expanded polystyrene sheets are normally used with a density of about 30 g/l as the thermal conductivity of the polymer has a minimum at these values. It is not advantageous to fall below this limit, even if it is technically possible, as it causes a drastic increase in the thermal conductivity of the sheet which must be compensated by an increase in its thickness. To avoid this drawback, suggestions have been made to fill the polymer with athermanous materials such as graphite, carbon black or aluminium.

European patent 620,246, for example, describes a procedure for preparing beads of expandable polystyrene containing an athermanous material distributed on the surface or, as an alternative, incorporated inside the particle itself.

The international patent application WO 1997/45477, describes compositions based on expandable polystyrene comprising a styrene polymer, from 0.05 to 25% of carbon black of the lump black type, and from 0.6 to 5% of a brominated additive to make the product fireproof.

Japanese patent application 63183941 describes the use of graphite for improving the insulating power of polystyrene foams.

The patent application JP 60031536 describes the use of carbon black in the preparation of expandable polystyrene resins.

The international patent application WO 2006/108672 A2 describes expandable vinyl aromatic polymers containing a defined amount of an expanding agent englobed in the polymeric matrix as well as a defined amount of an athermanous additive comprising carbon black homogenously distributed in the polymeric matrix and a process for improving the insulating capacity of expanded vinyl aromatic polymers.

The international patent application WO 2006/058733 A1 describes expandable styrene polymer granulates containing a defined amount of a filler, selected from specific powdered inorganic materials, and a defined amount of carbon black or graphite, a method for producing said granulates and particulate expanded plastics thus obtained showing a reduced thermal conductivity.

The international patent application WO 2006/61571 describes compositions based on expandable polystyrene comprising a styrene polymer having a weight average molecular weight Mw of 150,000-450,000, from 2 to 20% by weight of an expanding agent and from 0.05 to less than 1% of carbon black with a surface area ranging from 550 to 1,600 $m^2/g$.

The Applicant has now found that it is possible to prepare a vinyl aromatic polymer with enhanced thermo-insulating properties, by using a carbon black having selected physical-chemical characteristics.

An object of the present invention therefore relates to expandable vinyl aromatic polymers comprising:

a) a matrix obtained by polymerizing 50-100% by weight of one or more vinyl aromatic monomers and 0-50% by weight of at least one co-polymerizable monomer;

b) 1-10% by weight calculated with respect to the polymer (a), of an expanding agent englobed in the polymeric matrix;

c) 0.01-20% by weight, calculated with respect to the polymer (a), of a filler including carbon black electrically conductive, with a reduced surface area and prepared using mineral oil or acetylene, homogeneously distributed in the polymeric matrix and with a surface area, measured according to ASTM D-3037/89, ranging from 5 to 200 $m^2/g$, preferably from 5 to 100 $m^2/g$.

According to the present invention, carbon black is electrically conductive as it has a specific electric resistance lower than 15 ohm·cm, preferably lower than 10 ohm·cm. Carbon black has a dimensional size ($d_{50}$) ranging from 30 to 500 nm, preferably from 30 to 100 nm. The dimensional size ($d_{50}$) is measured by means of a laser granulometer and represents the average volumetric diameter of 50% of the powder particles. The electric conductivity (p) is measured by incorporating 25% of carbon black in high density polyethylene and preparing a sample 2 cm wide, at least 4 cm long and with a thickness ranging from 0.5 to 3 mm. The measurement of the electric conductivity is effected by means.of a 4-point Ohmeter with high internal resistance and is obtained from the following formula:

$$\rho = R \times A/L$$

wherein R is the resistance (Ohm), A the area ($cm^2$) of the sample crossed by the electric current and L (cm) the distance between the electrodes.

In a preferred embodiment of the present invention the carbon black is prepared starting from fuel oil or acetylene.

An example of carbon black according to the present invention is carbon black Ensaco EN 250 G produced by Timcal.

More information on conductive carbon black with a reduced surface area is available in the Journal of Vinyl and Additive Technology "Meeting Application Requirements with Conductive Carbon Blacks" of Christine VanBellingen, Nicolas Probst; Kautschuh Gummi Kunststoffe 48, Nr 7-8/95 p. 509-511; Carbon Black of J. B. Donnet, R.C. Barsal and M. J. Wang, Ed. Dekker.

According to the present invention, the filler added to the vinyl aromatic polymer can include up to 5% by weight of graphite, for example from 0.01 to 5% by weight, preferably from 0.05 to 4.5%. The natural or synthetic graphite can have a dimensional size ($d_{50}$) ranging from 0.5 to 50 $\mu$m, with a surface area of 5-50 $m^2/g$. An example is the product SFG6 produced by Timcal, having 3.5 $\mu$m of dso.

The term "vinyl aromatic monomer" as used in the present description and claims, essentially refers to a product having the following general formula:

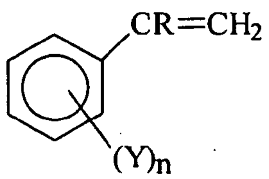

(I)

wherein R is hydrogen or a methyl group, n is zero or an integer ranging from 1 to 5 and Y is an halogen, such as chlorine or bromine, or an alkyl or alkoxyl radical having from 1 to 4 carbon atoms.

Examples of vinyl aromatic monomers having the general formula mentioned above are: styrene, $\alpha$-methyl styrene, methyl styrene, ethyl styrene, butyl styrene, dimethyl styrene, mono-, di-, tri-, tetra- and pentachlorostyrene, bromostyrene, methoxystyrene, acetoxystyrene, etc.. Preferred vinyl aromatic monomers are styrene and $\alpha$-methyl styrene.

The vinyl aromatic monomers having general formula (I) can be used alone or in a mixture of up to 50% by weight with other co-polymerizable monomers. Examples of said monomers are (meth)acrylic acid, $C_1$-$C_4$ alkyl esters of methacrylic acid, such as methyl acrylate, methyl methacrylate, ethyl acrylate, ethyl methacrylate, isopropyl acrylate, butyl acrilate, amides and nitriles of (meth)acrylic acid, such as acrylamide, methacrylamide, acrylonitrile, meth- acrylinitrile, butadiene, ethylene, divinyl benzene, maleic anhydride, etc.. Preferred copolymerizable monomers are acrylonitrile and methyl methacrylate.

Any expanding agent capable of being englobed in the vinyl aromatic polymeric matrix can be used in combination with the expandable polymers object of the present invention. Typical examples are aliphatic hydrocarbons, Freon, carbon dioxide, water, etc..

Carbon black also has a content of sulphur, measured according to ASTM 4527, ranging from 0,1 to 2,000 ppm, preferably from 50 to 130 ppm, an ash residue ranging from 0.001 to 0,05% preferably from 0.01 to 0.03% (according to ASTM D-1506-99), a heat loss (measured according to ASTM D-1509) from 0.001 to 1%, preferably from 0.01 to 0.5%, a DBPA (measured according to ASTM D-2414) of 50-500 ml/(100 g), preferably 100-300 ml/(100 g) and an iodine number (according to ASTM D-1510) ranging from 10 to 300 g/Kg, preferably from 10 to 100 g/Kg.

Carbon black can be added to the vinyl aromatic polymer either through suspension or re-suspension polymerization or through the continuous mass technology, in such a quantity that its final concentration in the polymer ranges from 0.01 to 20% by weight, preferably from 0.1 to 6%.

After the addition of the filler, an expandable polymer is obtained, which can be transformed to produce expanded articles having a density ranging from 5 to 50 g/l, preferably from 10 to 25 g/l. These materials have an excellent heat insulation capacity, expressed by a thermal conductivity ranging from 25 to 50 mW/mK, preferably from 30 to 45 mW/mK, which is generally even more than 10% lower with respect to that of equivalent expanded materials without fillers currently on the market, for example EXTIR A-5,000 of Polimeri Europa SpA. Thanks to this characteristic of the expandable polymers object of the present invention, it is possible to prepare heat-insulated articles with a significant saving of material or, for example, to prepare sheets with a lesser thickness than those prepared with traditional non-filled polymers, with a consequent saving in space and product.

The expandable polymers object of the present invention can be added with the conventional additives normally used with traditional materials, such as pigments, stabilizers, flame-retardant agents, antistatic and detaching agents, etc..

The procedures for the preparation of expandable polymers with an enhanced heat conductivity and with a density, after expansion, lower than 50 g/l, represent a further object of the present invention.

In particular, a further object of the present invention relates to a process for preparing expandable vinyl aromatic polymers, which comprises the polymerization in an aqueous suspension of one or more vinyl aromatic monomers, possibly together with at least one polymerizable co-monomer in quantities up to 50% by weight, in the presence of a filler including electrically

conductive carbon black having a surface area ranging from 5 to 200 $m^2/g$, with the above-mentioned characteristics, in the presence of a peroxide radical initiator, possibly containing at least one aromatic ring, and an expanding agent added before, during or at the end of the polymerization.

The filler can include up to 5% by weight of graphite, for example from 0.01 to 5% by weight, preferably from 0.05 to 4.5%. The synthetic or natural graphite can have a dimension ranging from 0.5 to 50 $\mu m$, with a surface area of 5-50 $m^2/g$.

The polymerization is carried out in an aqueous suspension with inorganic salts of phosphoric acid, for example, tri-calcium phosphate or magnesium phosphate. These salts can be added to the polymerization mixture both finely subdivided or synthesized in situ by reaction, for example, between sodium pyrophosphate and magnesium sulphate.

These inorganic salts are assisted in their suspending action by anionic surface active agents, for example sodium dodecylbenzenesulphonate or precursors such as sodium metabisulphite, as described in US patent 3,631,014.

The polymerization can also be carried out in the presence of organic suspending agents such as polyvinylpyrrolidone, polyvinyl alcohol, etc..

The initiating system normally comprises two peroxides, the first with a halving time of one hour at 85-95°C and the other with a halving time of one hour at 110-120°C. Examples of these initiators are benzoylperoxide and tertbutylperbenzoate.

The vinyl aromatic polymer or copolymer which is obtained has an average molecular weight Mw ranging from 50,000 to 220,000, preferably from 70,000 to 200,000. In general, more details on procedures for the preparation of expandable vinyl aromatic polymers in aqueous solution or, more generally, polymerization in suspension, can be found in Journal of Macromolecular Science, Review in Macromolecular Chemistry and Physics C31 (263) 215-299 (1991).

To improve the stability of the suspension, it is possible to enhance the viscosity of the reagent solution by dissolving vinyl aromatic polymer therein, in a concentration of 1 to 30% by weight, preferably from 5 to 20%, calculated with respect to the monomer alone. In a preferred embodiment of the present invention the polymerization in suspension takes place through a solution of vinyl aromatic polymer in the monomer, or mixture of monomers, wherein the concentration of polymer ranges from 1 to 30% by weight. The solution can be obtained by dissolving a preformed polymer in the reagent mix (for example fresh polymer or waste- products from previous polymerizations and/or expansions) or by a mass prepolymerization of the monomer, or blend of monomers, until the previously mentioned concentrations are obtained, and subsequetnly continuing the polymerization in aqueous suspension in the presence of the remaining additives.

During polymerization in suspension, polymerization additives are used which are typically those for producing expandable vinyl aromatic polymers, such as stabilizing agents of the suspension, chain-transfer agents, expansion co-adjuvants, nucleating agents, plasticizers, etc.. In particular, during polymerization, it is preferable to add flame retardants, in a quantity ranging from 0.1 to 8% and synergetic products in quantities ranging from 0.05 to 2% with respect to the resulting polymer weight.

Flame retardants particularly suitable for the expandable vinyl aromatic polymers object of the present invention are aliphatic, cyclo-aliphatic compounds, brominated aromatic compounds, such as hexabromocyclododecane, pentabromomonochlorocyclohexane and pentabromophenyl allyl ether.

The expansion agents are preferably added during the polymerization phase, or subsequently by means of the re-suspension technology. In particular, the latter comprises the phases of:

- aqueous or mass suspension polymerization of one or more vinyl aromatic monomers in the presence of the filler alone, including carbon black;
- separation of the beads and granules thus obtained;
- re-suspension in water of the beads or granules and heating until their spherical form is obtained;
- addition to the suspension of expanding agents and keeping the beads in contact with the same until impregnation; and
- repeated separation of the beads.

In a preferred embodiment of the invention the expanding agents are added during the polymerization phase and are selected from aliphatic or cyclo-aliphatic hydrocarbons containing from 3 to 6 carbon atoms; halogenated derivatives of aliphatic hydrocarbons containing from 1 to 3 carbon atoms; carbon dioxide and water.

The expanding agents are selected from aliphatic or cyclo-aliphatic hydrocarbons containing from 3 to 6 carbon atoms such as n-pentane, iso-pentane, cyclopentane or blends thereof; halogenated derivatives of aliphatic hydrocarbons containing from 1 to 3 carbon atoms, such as, for example, dichlorodifluoromethane, 1,2,2-trifluoroethane, 1,1,2-trifluoroethane; carbon dioxide and water.

At the end of the polymerization, substantially spherical polymer beads are obtained, with an average diameter ranging from 0.2 to 2 mm, in which the filler, including carbon black, and other possible additives, prove to be homogeneously dispersed.

The beads are then discharged from the polymerization reactor and washed, in continuous or batchwise, with non-ionic surface-active agents or, alternatively, with acids, as described in US patent 5,041,465. The polymer beads can be treated thermally with hot air ranging from 30 to 60°C.

A further object of the present invention relates

to a process for preparing in continuous mass, expandable vinyl aromatic polymers, which includes the following steps in series:

i. mixing a vinyl aromatic polymer in granular form or already in the molten state, with an average molecular weight Mw ranging from 50,000 to 220,000, preferably from 70,000 to 200,000,as described above, together with a filler containing conductive carbon black with a surface area ranging from 5 to 200 $m^2/g$, having the characteristics mentioned above. The filler can include up to 5% by weight of graphite, for example from 0.01 to 5% by weight, preferably from 0.05 to 4.5%. The natural or synthetic graphite can have a dimensional size ranging from 0.5 to 50 $\mu$m, preferably from 1 to 15 $\mu$m, with a surface area of 5-50 $m^2/g$;
ii. optionally heating the vinyl aromatic polymer to a temperature higher than the relative melting point;
iii. incorporating the expanding agent and possible flame retardants in the molten polymer, before extrusion through a die;
iv. mixing the polymeric composition thus obtained by means of static or dynamic mixing elements; and
v. granulating the composition thus obtained in a device including a die, a cutting chamber and a cutting system.

At the end of the granulation, expandable beads can be obtained with a substantially spherical form having an average diameter ranging from 0.2 to 2 mm.

According to the present invention, step (i) can be effected by feeding the polymeric granule already formed, possibly mixed with processing waste products, in an extruder. The single components are mixed herein, the polymeric portion is subsequently melted and an expanding agent is added.

Alternatively, the polymer can be used already in the molten state, coming directly from the polymerization plant (in solution), particularly from the devolatilization unit. The molten polymer is fed to suitable devices, for example an extruder or a static mixer, where it is mixed with the additives and then with the expanding agent and, it is subsequently extruded to give the expandable granulate, object of the present invention.

The granules of the polymeric composition can be reheated to a temperature lower than or equal to the glass transition temperature (Tg) or even slightly higher, for example the Tg plus up to 8°C, possibly under pressure. A detailed method for preparing vinyl aromatic polymers in continuous mass, is described in the international patent application WO 03/53651.

At the end of the polymerization, either in suspension or continuous mass, the expandable beads are subjected to pre-treatment which is normally applied to conventional expandable beads and which essentially consists in:

1. covering the beads with an antistatic liquid agent such as amines, ethoxylated tertiary alkylamines, ethylene oxide / propylene oxide copolymers, etc.. Said agent allows the coating to adhere and facilitates the screening of the beads prepared in suspension;
2. applying the coating to said beads, which essentially consists of a mixture of mono-, di- and tri-esters of glycerine (or other alcohols) with fatty acids, and metal stearates such as zinc and/or magnesium stearate, possibly mixed with carbon black.

Some illustrative and non-limiting examples are provided hereunder for a better understanding of the present invention and for its embodiment.

EXAMPLE 1

A mixture is charged into a closed and stirred container, consisting of 150 parts by weight of water, 0.2 parts of sodium pyrophosphate, 100 parts of styrene, 0.25 parts of benzoyl peroxide, 0.25 parts of tert-butyl perbenzoate and 1 part of carbon black Ensaco 250G sold by TIMCAL of Willebroek (Belgium), having an average diameter of about 50 nm, a BET of 67 $m^2/g$, an ash content of 0.02%, a sulphur content lower than 300 ppm, a heat loss of 0.1%, a DBPA number of 190 ml/(100 g), an electric conductivity of 6 ohm·cm. The mixture is heated under stirring to 90°C.

After about 2 hours at 90°C, 4 parts of a solution of polyvinylpyrrolidone at 10% are added. The mixture is heated to 100°C, still under stirring, for a further 2 hours, 7 parts of a 70/30 mixture of n-pentane and i-pentane are added, the whole mixture is heated for a further 4 hours to 125°C, it is then cooled and the batch is discharged.

The beads of expandable polymer thus produced are subsequently collected and washed with demineralised water containing 0.05% of a non-ionic surface-active agent consisting of a fatty alcohol condensed with ethylene oxide and propylene oxide, sold by Huntsman under the trade-name of Empilan 2638. They are then dried in a barely warm air flow, 0.02% of a non-ionic surface-active agent is added, consisting of a condensate of ethylene oxide and propylene oxide on a glycerine base, sold by Dow (Voranol CP4755) and they are screened to separate a fraction with a diameter ranging from 1 to 1.5 mm.

This fraction proved to represent 40%, 30% being the fraction between 0.5 and 1 mm, 15% the fraction between 0.2 and 0.5 mm, and 15% the large fraction, between 1.5 and 3 mm.

Part 1: 0.2% of glyceryl monostearate and 0.1% of zinc stearate are added to the fraction of 1 to 1.5 mm.

The product is pre-expanded with steam at a temperature of 100°C, left to age for 1 day and used to mould blocks (having dimensions of 1040x1030x550 mm).

The blocks were then cut to prepare flat sheets on which the thermal conductivity is measured. The thermal conductivity was 35.3 mW/mK whereas that of a sheet having the same density (17 g/l) prepared with a traditional reference product (EXTIR A-5000) was equal to 41 mW/mK.

Part 2: a portion of the fraction of 1 to 1.5 mm is treated in a hot air bed at 40°C for 1 hour and subsequently cooled, 0.2% of glyceryl monostearate and 0.1% of zinc stearate are then added. The product is then expanded and tested: the thermal conductivity (method ISO 8301 at 10°C) was equal to 33.5 mW/mK at 17 g/l.

EXAMPLE 2.

A mixture is charged into a closed and stirred container, consisting of 150 parts by weight of water, 0.2 parts of sodium tricalciumphosphate, 100 parts of styrene, 0.25 parts of benzoyl peroxide, 0.25 parts of tertbutylperbenzoate, 0.01 parts of sodium metabisulphite and 1 part of the carbon black used in example 1. The mixture is heated under stirring to 90°C.

After about 2 hours at 90°C, the mixture is heated for a further 2 hours to 100°C, 7 parts of a 70/30 mixture of n-pentane and i-pentane are added, the mixture is heated for a further 4 hours to 125°C, it is then cooled and discharged.

The beads of expandable polymer thus produced are processed as in example 1 and the fraction with a diameter ranging from 1 to 1.5 mm is separated.

This fraction proved to represent 60%, 25% being the fraction from 0.5 to 1 mm, 5% the fraction from 0.2 to 0.5 mm, and 10% the large fraction, from 1.5 to 3 mm.

0.2% of glyceryl monostearate and 0.1% of zinc stearate are added to the fraction of 1 to 1.5 mm.

The expansion and moulding were effected as described in example 1 (Part 1). The thermal conductivity proved to be identical to that of example 1.

EXAMPLE 3

Example 1 was repeated with the addition of 2.5 parts of carbon black.

The beads of expandable polymer thus produced are processed as in example 1, separating the fraction ranging from 1 to 1.5 mm.

The fraction from 1 to 1.5 mm is then processed as described in example 1 (Part 1). The thermal conductivity proved to be 32.1 mW/mK at 17 g/l. A portion of the fraction ranging from 1 to 1.5 mm is treated in a hot air bed at 40°C for 1 hour and subsequently cooled, 0.2% of glyceryl monostearate and 0.1% of zinc stearate are then added. The product is subsequently expanded and evaluated: the thermal conductivity proved to be equal to 31.8 mW/mK at 17 g/l.

Comparative EXAMPLE 3

Example 1 (Part 2) was repeated by substituting carbon black EN250G with 5 parts of carbon black T990 sold by the company Continental Carbon of Houston - Texas (USA) having an average diameter of 362 nm, a BET area of 10 $m^2/g$, an electric conductivity higher than 25 ohm·cm. The thermal conductivity proved to be equal to 33 mW/mK at 17 g/l.

EXAMPLE 4

Example 2 was repeated, adding 4 parts of carbon black. The thermal conductivity proved to be equal to 31 mW/mK at 17 g/l and 32 mW/mK at 13 g/l. A part of the fraction ranging from 1 to 1.5 mm is treated in a hot air bed at 40°C for 1 hour and subsequently cooled, 0.2% of glyceryl monostearate and 0.1% of zinc stearate are then added. The product is subsequently expanded and evaluated: the thermal conductivity proved to be equal to 31.0 mW/mk at 17 g/l.

EXAMPLE 5

Example 1 (Part 1) was repeated substituting the carbon black EN250G with the type with acetylene Shawinigan Black AB100 sold by Chevron Phillips having an average diameter of 42 nm, a BET area of 75 $m^2/g$, an iodine number of 90 mg/g, an electric conductivity of 4 ohm.cm. The thermal conductivity proved to be 35.8 mW/mk at 17 g/l.

EXAMPLE 6

Example 1 was repeated adding 1.2% of hexabromocyclododecane Saytex HP900 sold by Albemarle and 0.3% of dicumylperoxide to make the product fireproof. The 1-1.5 mm fraction is then processed as in Example 1 (Part 1). The sheets are put in an oven at 70°C for 2 days to remove the residual pentane: the test samples are then collected (9cm x 19cm x 2cm) for the fire behaviour test according to the regulation DIN 4102. The test samples pass the test.

The thermal conductivity remains unvaried.

EXAMPLE 7

94.83 parts of a molten 96/4 styrene/alphamethylstyrene copolymer having a melt index of 9 g/10' at 200°C/5kg, 2 parts of the carbon black used in Example 1, 0.5 parts of ethylene-bis-stereamide, 2.63 parts of stabilized hexabromocyclododecane (BRE 5300 sold by Chemtura) and 0.54 parts of 2,3-dimethyl 2,3-diphenylbutane (Perkadox 30 sold by Akzo) are fed to an extruder directly from the devolatilization section. After bringing the polymer to 200°C, 5.2 parts of an n-pentane/i-pentane mixture are injected, with a weight ratio of 75/25 with respect to 100 parts of molten product.

The resulting mass is mixed by means of static mixers, cooled to 180°C, extruded through die holes having a diameter of 0.6 mm, granulated by means of a series of rotating knives in contact with the surface of the die in order to obtain approximately spherical beads having an average diameter of about 1.2 mm. The die is subjected to cooling by the passed of forced water.

The beads are conveyed by the water flow, cooled to 35°C, separated from the water, dried in a stream of barely warm air.

200 ppm of glycerine are then added to the beads with the coating of Example 1.

The beads are subsequently expanded, moulded and, as in the previous examples, sheets at 17 g/l are obtained for the fire behaviour test (the test samples pass the fire test according to DIN 4102) and for the thermal conductivity test, which proved to be 31.8 mW/mk

EXAMPLE 8

Example 7 is repeated but feeding 4 parts of the carbon black of Example 1. The thermal conductivity proved to be, at 17.4 g/l, 30.3 mW/mk and at 11.2 g/l, 32.6 mW/mk.

EXAMPLE 9

Example 7 is repeated but feeding 5.0 parts of the carbon black of Example 1 and 0.2 parts of Timcal SFG6 graphite. The thermal conductivity proved to be, at 18.3 g/l, 30.1 mW/mk.

EXAMPLE 10

Example 7 is repeated but feeding to the extruder styrene/alpha-methyl-styrene copolymer in granules premixed with carbon black, stabilized hexabromocyclododecane and dimethyldiphenylbutane. The thermal conductivity proved to be, at 17.3 g/l, 31.6 mW/mk.

## Claims

1. Expandable vinyl aromatic polymers which comprise:

   a) a matrix obtained by polymerizing 50-100% by weight of one or more vinyl aromatic monomers and 0-50% by weight of at least one copolymerizable monomer;
   b) 1-10% by weight calculated with respect to the polymer (a), of an expanding agent englobed in the polymeric matrix;
   c) 0.01-20% by weight, calculated with respect to the polymer (a), of a filler including carbon black electrically conductive and homogeneously distributed in the polymeric matrix, with a surface area, measured according to ASTM D-3037/89, ranging from 5 to 200 $m^2/g$,
   wherein the carbon black has a specific electric resistance lower than 15 Ohm.cm.

2. The expandable vinyl aromatic polymers according to claim 1, wherein the carbon black has a dimensional size ranging from 30 to 500 nm.

3. The expandable vinyl aromatic polymers according to any of the previous claims, wherein the carbon black, electrically conductive, is **characterized by** a sulphur content ranging from 0.1 to 2000 ppm, an ash residue ranging from 0.001 to 0.05%, a heat loss ranging from 0.001 to 1%, an iodine number ranging from 10 to 300 g/kg and an absorption value of dibutylphthalate (DBPA) ranging from 50 to 500 ml/(100 g).

4. The expandable vinyl aromatic polymers according to any of the previous claims,
   wherein the electrically conductive carbon black is present in a quantity ranging from 0.1 to 6% by weight, with respect to the polymer.

5. Expanded articles having a density ranging from 5 to 50 g/l and a thermal conductivity ranging from 25 to 50 mW/mK, which are obtained after expansion of the expandable vinyl aromatic polymers according to any of the previous claims.

6. A process for preparing expandable vinyl aromatic polymers according to claim 1 which comprises polymerizing one or more vinyl aromatic monomers in an aqueous suspension, optionally together with at least one polymerizable comonomer in a quantity of up to 50% by weight, in the presence of a filler comprising the electrically conductive carbon black according to claim 1 having a surface area ranging from 5 to 200 $m^2/g$ and in the presence of a peroxide radical initiator, optionally containing at least one aromatic ring, and an expanding agent added before, during or at the end of the polymerization.

7. The process according to claim 6, wherein the carbon black has a dimensional size ranging from 30 to 500 nm.

8. The process according to any of the claims from 6 to 7, wherein the carbon black is **characterized by** a sulphur content ranging from 0.1 to 2,000 ppm, an ash residue ranging from 0.001 to 0.05%, a heat loss ranging from 0.001 to 1%, an iodine number ranging from 10 to 300 g/kg and an absorption value of dibutylphthalate (DBPA) ranging from 50 to 500 ml/(100 g).

9. The process according to any of the claims from 6 to 8, wherein at the end of the polymerization, substantially spherical polymer beads are obtained with an average diameter ranging from 0.2 to 2 mm in which the filler comprising electrically conductive carbon black is homogeneously dispersed.

**10.** The process according to any of the claims from 6 to 9, wherein the filler comprises flame-retardant agents in a quantity ranging from 0.1 to 8% and synergic products in a quantity ranging from 0.05 to 2% with respect to the weight of the resulting polymer.

**11.** The process according to any of the claims from 6 to 10, wherein the polymer beads are thermally treated with hot air ranging from 30 to 60°C.

**12.** A process for the preparation of expandable vinyl aromatic polymers according to claim 1 which comprises the following phases:

- polymerizing one or more vinyl aromatic monomers in an aqueous suspension or in mass, in the presence of the filler alone comprising the electrically conductive carbon black according to claim 1;
- separating the beads or granules thus obtained;
- resuspending the beads or granules in water and heating until their spherulization is obtained;
- adding the expanding agents to the suspension and keeping the beads in contact therewith until impregnation; and
- re-separating the beads.

**13.** A process for preparing expandable vinyl aromatic polymers according to claim 1 in continuous mass, which comprises the following steps in series:

i. mixing a vinyl aromatic polymer in granular form or already in the molten state, comprising 50-100% by weight of one or more vinyl aromatic monomers and 0-50% by weight of at least one copolymerizable monomer, together with a filler comprising electrically conductive carbon black according to claim 1 with a surface area ranging from 5 to 200 $m^2/g$;
ii. optionally heating the vinyl aromatic polymer to a temperature higher than the relative melting point;
iii. incorporating an expanding agent and possible additives in the molten polymer, before extrusion through a die;
iv. mixing the polymeric composition thus obtained by means of static or dynamic mixing elements; and
v. granulating the composition thus obtained in a device which comprises a die, a cutting chamber and a cutting system.

**14.** The process according to claim 13, wherein the carbon black has a dimensional size ranging from 30 to 500 nm.

**15.** The process according to any of the claims from 13 to 14, wherein the conductive carbon black is **characterized by** a sulphur content ranging from 0.1 to 2,000 ppm, an ash residue ranging from 0.001 to 0.05%, a heat loss ranging from 0.001 to 1%, an iodine number ranging from 10 to 300 g/kg and an absorption value of dibutylphthalate (DBPA) ranging from 50 to 500 ml/(100 g).

**16.** The process according to any of the claims from 13 to 15, wherein the vinyl aromatic polymer is already in the molten state and derives from the devolatilization step of a polymerization plant.

**17.** The process according to any of the claims from 6 to 16, wherein the expandable beads produced are pre-treated by means of the methods generally applied to beads produced with conventional processes and which essentially consist in:

a) covering the beads with an antistatic liquid agent such as amines, ethoxylated tertiary alkylamines, ethylene oxide / propylene oxide copolymers;
b) applying the coating to said beads, which essentially consists of a mixture of mono-, di- and tri-esters of glycerine with fatty acids, and metal stearates such as zinc and magnesium stearate.

**18.** The process according to claim 17, wherein the filler comprising electrically conductive carbon black is also added in the coating together with the mixtures of esters.

## Patentansprüche

**1.** Expandierbare bzw. verschäumbare Vinyl-aromatische Polymere, die umfassen:

a) eine Matrix, erhalten durch Polymerisieren von 50-100 Gew.-% von einem oder mehreren Vinyl-aromatischen Monomeren und 0-50 Gew.-% von mindestens einem copolymerisierbaren Monomer;
b) 1-10 Gew.-%, berechnet hinsichtlich des Polymers (a), von einem in der polymeren Matrix eingeschlossenen expandierbaren Mittel bzw. Verschäumungs-Mittel;
c) 0,01-20 Gew.-%, berechnet hinsichtlich des Polymers (a), von einem Füllstoff, einschließlich elektrisch leitfähigen Ruß, und homogen verteilt in der polymeren Matrix mit einer Oberfläche, gemessen gemäß ASTM D-3037/89, im Bereich

von 5 bis 200 $m^2$/g, wobei der Ruß einen spezifischen elektrischen Widerstand von weniger als 15 Ohm.cm aufweist.

**2.** Expandierbare bzw. verschäumbare Vinyl-aromatische Polymere nach Anspruch 1, wobei der Ruß eine Abmessungs-Größe im Bereich von 30 bis 500 nm aufweist.

**3.** Expandierbare bzw. verschäumbare Vinyl-aromatische Polymere nach einem der vorangehenden Ansprüche, wobei der elektrisch leitfähige Ruß durch einen Schwefel-Gehalt im Bereich von 0,1 bis 2000 ppm, einen Asche-Rückstand im Bereich von 0,001 bis 0,05 %, einen Wärme-Verlust (heat loss) im Bereich von 0,001 bis 1 %, eine Jod-Zahl im Bereich von 10 bis 300 g/kg und einen Absorptions-Wert von Dibutylphthalat (DBPA) im Bereich von 50 bis 500 ml/(100 g) gekennzeichnet ist.

**4.** Expandierbare bzw. verschäumbare Vinyl-aromatische Polymere nach einem der vorangehenden Ansprüche, wobei der elektrisch leitfähige Ruß in einer Menge im Bereich von 0,1 bis 6 Gew.-%, hinsichtlich des Polymers, vorliegt.

**5.** Expandierte bzw. verschäumte Gegenstände mit einer Dichte im Bereich von 5 bis 50 g/l und einer Wärmeleitfähigkeit im Bereich von 25 bis 50 mW/mK, die nach Expansion bzw. Verschäumen der expandierbaren bzw. verschäumbaren Vinyl-aromatischen Polymere nach einem der vorangehenden Ansprüche erhalten werden.

**6.** Verfahren zum Herstellen expandierbarer bzw. verschäumbarer Vinyl-aromatischer Polymere nach Anspruch 1, das Polymerisieren von einem oder mehreren Vinyl-aromatischen Monomeren in einer wässrigen Suspension, gegebenenfalls zusammen mit mindestens einem polymerisierbaren Comonomer in einer Menge von bis zu 50 Gew.-%, in Gegenwart von einem Füllstoff, umfassend den elektrisch leitfähigen Ruß nach Anspruch 1 mit einer Oberfläche im Bereich von 5 bis 200 $m^2$/g und in Gegenwart von einem Peroxid-Radikal-Starter, gegebenenfalls enthaltend mindestens einen aromatischen Ring, und ein vor, während oder am Ende der Polymerisation zugegebenes expandierbares Mittel bzw. Verschäumungs-Mittel umfasst.

**7.** Verfahren nach Anspruch 6, wobei der Ruß eine Abmessungs-Größe im Bereich von 30 bis 500 nm aufweist.

**8.** Verfahren nach einem der Ansprüche 6 bis 7, wobei der Ruß durch einen Schwefel-Gehalt im Bereich von 0,1 bis 2 000 ppm, einen Asche-Rückstand im Bereich von 0,001 bis 0,05 %, einen Wärme-Verlust (heat loss) im Bereich von 0,001 bis 1 %, eine Jod-Zahl im Bereich von 10 bis 300 g/kg und einen Absorptions-Wert von Dibutylphthalat (DBPA) im Bereich von 50 bis 500 ml/(100 g) gekennzeichnet ist.

**9.** Verfahren nach einem der Ansprüche 6 bis 8, wobei am Ende der Polymerisation im Wesentlichen kugelförmige Polymer-Perlen mit einem mittleren Durchmesser im Bereich von 0,2 bis 2 mm, in denen der elektrisch leitfähigen Ruß umfassende Füllstoff homogen dispergiert ist, erhalten werden.

**10.** Verfahren nach einem der Ansprüche 6 bis 9, wobei der Füllstoff Flamm-hemmende Mittel in einer Menge im Bereich von 0,1 bis 8 % und synergistische Produkte in einer Menge im Bereich von 0,05 bis 2 %, hinsichtlich des Gewichts des erhaltenen Polymers, umfasst.

**11.** Verfahren nach einem der Ansprüche 6 bis 10, wobei die Polymer-Perlen mit heißer Luft im Bereich von 30 bis 60°C Wärme-behandelt werden.

**12.** Verfahren zur Herstellung von expandierbaren bzw. verschäumbaren Vinyl-aromatischen Polymeren nach Anspruch 1, das die nachstehenden Phasen umfasst:

- Polymerisieren von einem oder mehreren Vinyl-aromatischen Monomeren in einer wässrigen Suspension oder in Masse, in Gegenwart des Füllstoffs allein, umfassend den elektrisch leitfähigen Ruß nach Anspruch 1;
- Abtrennen der so erhaltenen Perlen oder Granulen;
- Resuspendieren der Perlen oder Granulen in Wasser und Erhitzen, bis deren Kugelbildung erhalten wird;
- Zugabe der expandierenden Mittel bzw. Verschäumungs-Mittel zu der Suspension und Halten der Perlen in Kontakt damit bis zur Imprägnierung; und
- erneutes Abtrennen der Perlen.

**13.** Verfahren zum Herstellen von expandierbaren bzw. verschäumbaren Vinyl-aromatischen Polymeren nach Anspruch 1 in kontinuierlicher Masse, das die nachstehenden Schritte in Reihe umfasst:

i. Mischen eines Vinyl-aromatischen Polymers in granulärer Form oder im bereits geschmolzenen Zustand, umfassend 50-100 Gew.-% von einem oder mehreren Vinyl-aromatischen Monomeren und 0-50 Gew.-% von mindestens einem copolymerisierbaren Monomer, zusammen mit einem Füllstoff, umfassend elektrisch leitfähigen Ruß nach Anspruch 1 mit einer Oberfläche im Bereich von 5 bis 200 $m^2/g$;
ii. gegebenenfalls Erhitzen des Vinyl-aromatischen Polymers auf eine Temperatur höher als der relative Schmelzpunkt;
iii. Einarbeiten eines expandierbaren Mittels bzw. Verschäumungs-Mittels und möglicher Additive in das geschmolzene Polymer vor der Extrusion durch eine Düse;
iv. Mischen der so erhaltenen polymeren Zusammensetzung mit Hilfe von statischen oder dynamischen Misch-Elementen; und
v. Granulieren der so erhaltenen Zusammensetzung in einer Vorrichtung, die eine Düse, eine Schneid-Kammer und ein Schneid-System umfasst.

**14.** Verfahren nach Anspruch 13, wobei der Ruß eine Abmessungs-Größe im Bereich von 30 bis 500 nm aufweist.

**15.** Verfahren nach einem der Ansprüche 13 bis 14, wobei der leitfähige Ruß durch einen Schwefel-Gehalt im Bereich von 0,1 bis 2 000 ppm, einen Asche-Rückstand im Bereich von 0,001 bis 0,05 %, einen Wärme-Verlust (heat loss) im Bereich von 0,001 bis 1 %, eine Jod-Zahl im Bereich von 10 bis 300 g/kg und einen Absorptions-Wert von Dibutylphthalat (DBPA) im Bereich von 50 bis 500 ml/(100 g) gekennzeichnet ist.

**16.** Verfahren nach einem der Ansprüche 13 bis 15, wobei das Vinyl-aromatische Polymer im bereits geschmolzenen Zustand vorliegt und von dem Entgasungs-Schritt von einer Polymerisations-Anlage stammt.

**17.** Verfahren nach einem der Ansprüche 6 bis 16, wobei die hergestellten expandierbaren bzw. verschäumbaren Perlen mit Hilfe der Verfahren, die allgemein auf mit üblichen Verfahren hergestellte Perlen angewendet werden, vorbehandelt werden und die im Wesentlichen darin bestehen:

a) Bedecken der Perlen mit einem antistatischen flüssigen Mittel, wie Amine, ethoxylierte tertiäre Alkylamine, Ethylenoxid / Propylenoxid-Copolymere;
b) Auftragen auf die Perlen der Beschichtung, die im Wesentlichen aus einem Gemisch von Mono-, Di- und Tri-estern von Glycerin mit Fettsäuren, und Metallstearaten, wie Zink- und Magnesiumstearat, besteht.

**18.** Verfahren nach Anspruch 17, wobei der elektrisch leitfähigen Ruß umfassende Füllstoff in die Beschichtung auch zusammen mit den Gemischen der Ester gegeben wird.

## Revendications

**1.** Polymères vinylaromatiques expansibles qui comprennent :

a) une matrice obtenue par polymérisation de 50 à 100 % en poids d'un ou plusieurs monomère(s) vinylaromatique(s) et de 0 à 50 % en poids d'au moins un monomère copolymérisable ;
b) 1 à 10 % en poids, calculés par rapport au polymère (a), d'un agent d'expansion englobé dans la matrice polymère ;
c) 0,01 à 20 % en poids, calculés par rapport au polymère (a), d'une charge contenant un noir de carbone électriquement conducteur et distribué de façon homogène dans la matrice polymère, présentant une surface spécifique, mesurée conformément à la norme ASTM D-3037/89, située dans la plage allant de 5 à 200 $m^2/g$,
dans lesquels le noir de carbone présente une résistance électrique spécifique inférieure à 15 ohm·cm.

**2.** Polymères vinylaromatiques expansibles selon la revendication 1, dans lesquels le noir de carbone présente une taille dimensionnelle située dans la plage allant de 30 à 500 nm.

**3.** Polymères vinylaromatiques expansibles selon l'une quelconque des revendications précédentes, dans lesquels le noir de carbone, électriquement conducteur, est **caractérisé par** une teneur en soufre située dans la plage allant de 0,1 à 2000 ppm, des cendres résiduelles situées dans la plage allant de 0,001 à 0,05 %, une perte de chaleur située dans la plage allant de 0,001 à 1 %, un indice d'iode situé dans la plage allant de 10 à 300 g/kg et un indice d'absorption de phtalate de dibutyle (DBPA) situé dans la plage allant de 50 à 500 ml/100 g.

**4.** Polymères vinylaromatiques expansibles selon l'une quelconque des revendications précédentes, dans lesquels le noir de carbone électriquement conducteur est présent en une quantité située dans la plage allant de 0,1 à 6 % en poids par rapport au polymère.

**5.** Articles expansés ayant une masse volumique située dans la plage allant de 5 à 50 g/l et une conductivité thermique située dans la plage allant de 25 à 50 mW/mK, qui sont obtenus après expansion des polymères vinylaromatiques expansibles selon l'une quelconque des revendications précédentes.

**6.** Procédé pour préparer des polymères vinylaromatiques expansibles selon la revendication 1, qui comprend la polymérisation d'un ou plusieurs monomère(s) vinylaromatique(s) dans une suspension aqueuse, éventuellement conjointement avec au moins un comonomère polymérisable en une quantité allant jusqu'à 50 % en poids, en présence d'une charge comprenant le noir de carbone électriquement conducteur selon la revendication 1 présentant une surface spécifique située dans la plage allant de 5 à 200 $m^2/g$ et en présence d'un amorceur radicalaire de type peroxyde, contenant éventuellement au moins un cycle aromatique, et un agent d'expansion ajouté avant, pendant ou à la fin de la polymérisation.

**7.** Procédé selon la revendication 6, dans lequel le noir de carbone présente une taille dimensionnelle située dans la plage allant de 30 à 500 nm.

**8.** Procédé selon l'une quelconque des revendications 6 et 7, dans lequel le noir de carbone est **caractérisé par** une teneur en soufre située dans la plage allant de 0,1 à 2000 ppm, des cendres résiduelles situées dans la plage allant de 0,001 à 0,05 %, une perte de chaleur située dans la plage allant de 0,001 à 1 %, un indice d'iode situé dans la plage allant de 10 à 300 g/kg et un indice d'absorption de phtalate de dibutyle (DBPA) situé dans la plage allant de 50 à 500 ml/100 g.

**9.** Procédé selon l'une quelconque des revendications 6 à 8, dans lequel, à la fin de la polymérisation, sont obtenues des perles polymères pratiquement sphériques présentant un diamètre moyen situé dans la plage allant de 0,2 à 2 mm, dans lesquelles la charge comprenant du noir de carbone électriquement conducteur est dispersée de façon homogène.

**10.** Procédé selon l'une quelconque des revendications 6 à 9, dans lequel la charge comprend des agents retardateurs d'inflammation en une quantité située dans la plage allant de 0,1 à 8 % et des produits synergiques en une quantité située dans la plage allant de 0,05 à 2 % par rapport au poids du polymère résultant.

**11.** Procédé selon l'une quelconque des revendications 6 à 10, dans lequel les perles polymères sont traitées thermiquement à l'air chaud dans la plage allant de 30 à 60°C.

**12.** Procédé pour la préparation de polymères vinylaromatiques expansibles selon la revendication 1, qui comprend les phases suivantes :

- polymérisation d'un ou plusieurs monomère(s) vinylaromatique(s) en suspension aqueuse ou en masse, en présence de la charge seule comprenant le noir de carbone électriquement conducteur selon la revendication 1 ;
- séparation des perles ou granules ainsi obtenus ;
- remise en suspension des perles ou granules dans de l'eau et chauffage jusqu'à obtention de leur mise sous forme de sphérules ;
- addition des agents d'expansion à la suspension et maintien des perles en contact avec ceux-ci jusqu'à imprégnation ; et
- de nouveau séparation des perles.

**13.** Procédé pour la préparation de polymères vinylaromatiques expansibles selon la revendication 1 en masse en continu, qui comprend les étapes suivantes en sérine :

i. mélange d'un polymère vinylaromatique sous forme granulaire ou déjà à l'état fondu, comprenant 50 à 100 % en poids d'un ou plusieurs monomère(s) vinylaromatique(s) et 0 à 50 % en poids d'au moins un monomère copolymérisable, conjointement avec une charge comprenant du noir de carbone électriquement conducteur selon la revendication 1 avec une surface spécifique située dans la plage allant de 5 à 200 $m^2/g$ ;
ii. éventuellement chauffage du polymère vinylaromatique à une température supérieure au point de fusion relatif ;
iii. incorporation d'un agent d'expansion et d'additifs éventuels dans le polymère fondu, avant extrusion à travers une filière ;
iv. mélange de la composition polymère ainsi obtenue au moyen d'éléments de mélange statiques ou dynamiques ; et
v. granulation de la composition ainsi obtenue dans un dispositif qui comprend une filière, une chambre de coupe et un système de coupe.

**14.** Procédé selon la revendication 13, dans lequel le noir de carbone présente une taille dimensionnelle située dans la plage allant de 30 à 500 nm.

**15.** Procédé selon l'une quelconque des revendications 13 et 14, dans lequel le noir de carbone conducteur est **caractérisé par** une teneur en soufre située dans la plage allant de 0,1 à 2000 ppm, des cendres résiduelles situées dans la plage allant de 0,001 à 0,05 %, une perte de chaleur située dans la plage allant de 0,001 à 1 %, un indice d'iode situé dans la plage allant de 10 à 300 g/kg et un indice d'absorption de phtalate de dibutyle (DBPA) situé dans la plage allant de 50 à 500 ml/100 g.

**16.** Procédé selon l'une quelconque des revendications 13 à 15, dans lequel le polymère vinylaromatique est déjà à l'état fondu et dérive de l'étape de dévolatilisation d'une usine de polymérisation.

**17.** Procédé selon l'une quelconque des revendications

6 à 16, dans lequel les perles expansibles produites sont prétraitées au moyen des procédés généralement appliqués aux perles produites avec des procédés conventionnels et qui consistent essentiellement à :

a) recouvrir les perles d'un agent liquide antistatique tel que des amines, des alkylamines tertiaires éthoxylées, des copolymères d'oxyde d'éthylène/ oxyde de propylène ;
b) appliquer le revêtement auxdites perles, lequel est constitué essentiellement d'un mélange de mono-, di- et tri-esters de glycérol avec des acides gras, et de stéarates métalliques tels que les stéarates de zinc et de magnésium.

**18.** Procédé selon la revendication 17, dans lequel la charge comprenant du noir de carbone électriquement conducteur est aussi ajouté dans le revêtement conjointement avec les mélanges d'esters.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 620246 A
- WO 199745477 A
- JP 63183941 B
- JP 60031536 B
- WO 2006108672 A2
- WO 2006058733 A1
- WO 200661571 A
- US 3631014 A
- US 5041465 A
- WO 0353651 A


### Non-patent literature cited in the description


- Meeting Application Requirements with Conductive Carbon Blacks. **CHRISTINE VANBELLINGEN ; NICOLAS PROBST ; CARBON BLACK ; J. B. DONNET ; R.C. BARSAL ; M. J. WANG.** Kautschuh Gummi Kunststoffe. 509-511
- Journal of Macromolecular Science, Review. *Macromolecular Chemistry and Physics,* 1991, vol. C31 (263), 215-299